# FASCICULE DE BREVET EUROPEEN

(11) **EP 1 031 777 B1**
(45) Date de publication et mention de la délivrance du brevet: **20.04.2005**
(21) Numéro de dépôt: 00440047.9
(22) Date de dépôt: 17.02.2000
(51) Int. Cl.: F16K 11/052

(54) **Ensemble à clapet et dispositif de circulation et de distribution de fluide comprenant un tel ensemble**
Klappeanordnung und Fluidumlauf- und Verteilergerät mit einer solchen Anordnung
Valve assembly and fluid circulation and distribution apparatus comprising such an assembly

(30) Priorité: 26.02.1999 FR 9902531
(43) Date de publication de la demande: 30.08.2000
(73) Titulaire: Mark IV Systemes Moteurs (Société Anonyme), 92000 Paris La Défense (FR)
(72) Inventeur: Menin, Denis, 68125 Houssen (FR); Guyon, David, 68370 Orbey (FR)
(74) Mandataire: Franzolin, Luigi

(56) Documents cités:
- CH-A- 483 974
- DE-A- 2 425 300
- DE-A- 3 420 474
- DE-A- 3 612 672

## Description

La présente invention concerne le domaine du pilotage de la circulation de fluides à travers des réseaux et des circuits formés de conduits, tubulaires ou non, interconnectés et raccordés entre eux, et a pour objet un ensemble à clapet ou vanne de distribution et/ou d'obturation, ainsi qu'un dispositif de circulation et de distribution de fluide(s) comprenant un tel ensemble de clapet.

Dans les systèmes de circulation et de distribution de fluides liquides et gazeux, il est commun d'utiliser, en tant qu'organes d'obturation ou de configuration des circuits de circulation, des clapets, ce notamment dans les véhicules à moteur.

Toutefois, la construction, la structure et l'installation des clapets actuels sont telles qu'ils perturbent sensiblement l'écoulement des fluides, ce quel que soit leur positionnement, et génère de ce fait systématiquement une perte de charge notable, ce même en position effacée autorisant le libre passage du flux de fluide.

Ces perturbations sont, en outre, souvent encore augmentées lorsque l'actionnement du clapet est réalisé par un dispositif de commande monté dans le système de circulation ou directement sur le clapet.

Par ailleurs, les clapets actuels et leurs dispositifs de commande présentent des constitutions complexes, nécessitent des opérations de montage et d'assemblage fastidieuses et sont directement et frontalement exposés à la poussée du flux de fluide, ce qui génère des pressions importantes sur le corps de clapet et accélère leur usure et la dégradation de l'étanchéité à l'obtention.

DE-A-36 12 672 et CH-A-483974 décrivent un ensemble à clapet selon les caractéristiques de le préambule de la revendication 1.

La présente invention a pour but de simplifier ultérieurement les opérations d'assemblage vis-à-vis les ensembles à clapet actuellement connus et, en outre, de améliorer l'étanchéité entre le corps de clapet et les parois internes de conduit(s).

A cet effet, la présente invention a pour objet un ensemble à clapet selon la revendication 1.

L'invention sera mieux comprise, grâce à la description ci-après, qui se rapporte à des modes de réalisation préférés, donnés à titres d'exemples non limitatifs, et expliqués avec référence aux dessins schématiques annexés, dans lesquels :
la figure 1 est une vue schématique de dessus par transparence d'un ensemble à clapet selon un premier mode de réalisation de l'invention ;
la figure 2 est une vue en élévation latérale, en coupe selon A-A et à une échelle différente de l'ensemble à clapet représenté sur la figure 1 ;
la figure 3 est une vue similaire à celle de la figure 1 d'une variante de réalisation de l'ensemble à clapet représenté sur cette dernière ;
la figure 4 est une vue schématique de dessus par transparence d'un ensemble à clapet selon un deuxième mode de réalisation de l'invention ;
la figure 5 est une vue similaire à celle de la figure 4 d'une variante de réalisation de l'ensemble à clapet représenté sur cette dernière ;
la figure 6 est une représentation similaire à celle de la figure 1 d'un ensemble à clapet selon un troisième mode de réalisation de l'invention ;
la figure 7 est une vue en perspective d'une pièce à insérer intégrant et portant différentes composantes d'un ensemble à clapet du type représenté sur les figures 1 à 3 ;
la figure 8 est une vue en perspective de la pièce représentée à la figure 6 mais dépourvue de ses composantes fonctionnelles ;
la figure 9 est une vue en perspective de la pièce d'un seul tenant faisant partie du dispositif de transfert et de distribution selon l'invention ;
la figure 10 est une vue de dessus en perspective du dispositif de transfert et de distribution obtenue par montage de la pièce à insérer de la figure 7 dans la pièce d'un seul tenant de la figure 9, et,
les figures 11 et 12 sont des vues en perspective, mais selon des angles différents, d'un dispositif selon la figure 10 après mise en place du circuit de la louche de dérivation et de mesure.

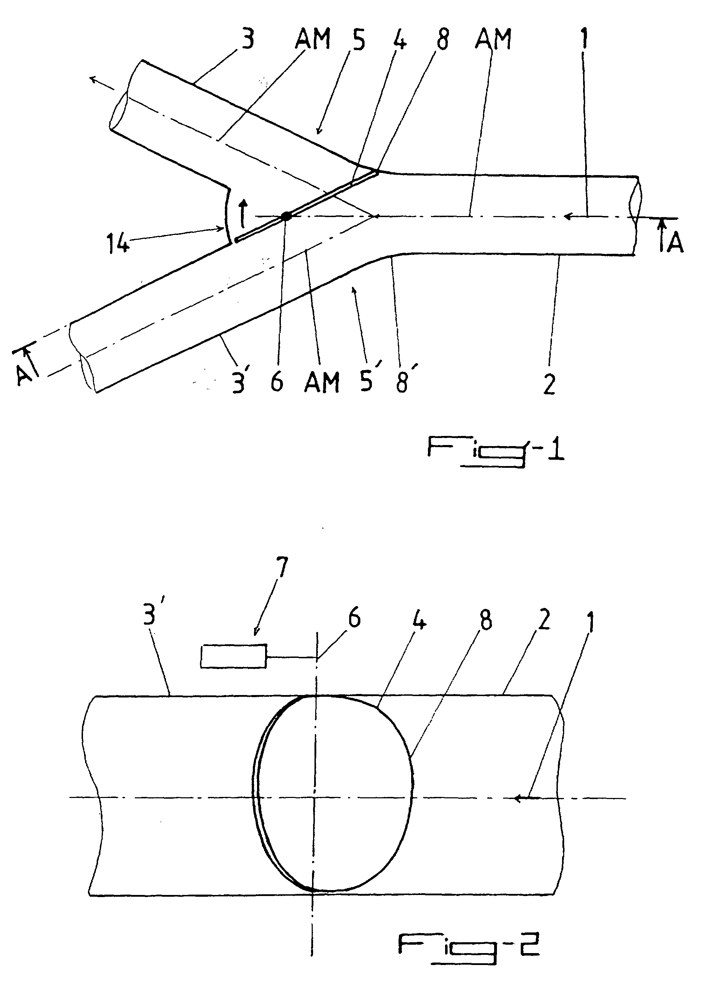

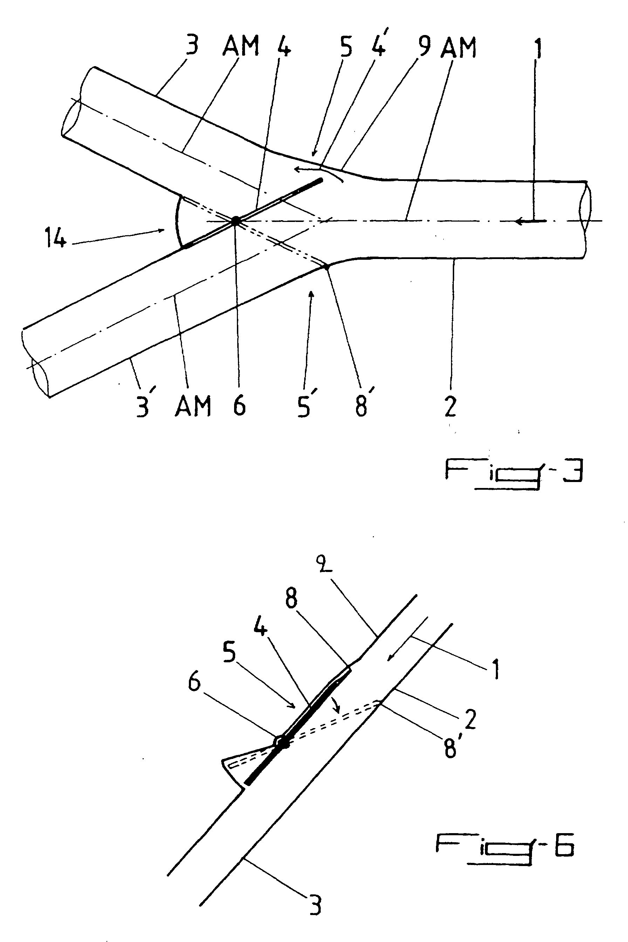

Comme le montrent notamment les figures 1 à 6 des dessins annexés, l'ensemble à clapet (ou vanne) de distribution ou d'obturation est destiné à contrôler le passage d'au moins un flux de fluide 1, 1' entre au moins un conduit amont ou primaire 2, 2' et au moins un conduit aval ou secondaire 3, 3' et comprend un corps de clapet 4 mobile formant organe de distribution et/ou d'obturation.

Conformément à l'invention, le corps de clapet 4 forme, dans au moins une de ses positions extrêmes, une partie de la paroi de la ou des portion(s) de conduit(s) intermédiaire(s) 5, 5' reliant ledit au moins un conduit amont ou primaire 2, 2' audit au moins un conduit aval ou secondaire 3, 3'.

Selon une première caractéristique de l'invention, l'axe de rotation 6 portant le corps du clapet 4 est monté en étant déporté latéralement par rapport à l'axe ou aux axes médians AM du ou des trajet(s) de circulation possibles pour le ou les flux de fluide(s) 1, 1', notamment dans les conduits aval ou secondaires 3, 3'.

De manière avantageuse, le corps de clapet 4 forme une partie de la ou des portion(s) de conduit(s) intermédiaire(s) 5, 5' dans chacune de ses positions extrêmes, ce qui permet de réduire les pertes de charges du flux de fluide dans les deux positions normalement occupées par le corps de clapet 4.

Comme le montrent les figures 1 et 3 à 6 des dessins annexés, la face du corps de clapet 4 exposée au flux de fluide 1, 1' est, quelle que soit la position extrême prise par ledit corps de clapet, attaquée par ledit flux selon un angle aigu (comme l'illustre l'angle entre la surface concernée dudit corps de clapet 4 et l'axe médian AM du trajet du fluide 1, 1' dans le conduit amont 2, 2' correspondant). Il en résulte une faible pression sur ledit corps de clapet 4, ce dernier réalisant davantage une déviation du flux de fluide 1, 1', qu'une obstruction du passage à condamner.

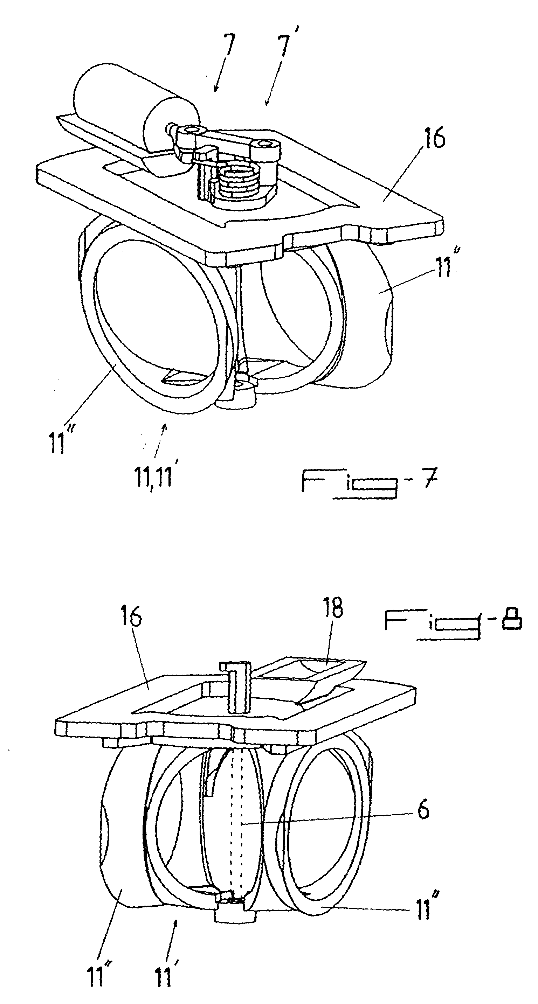

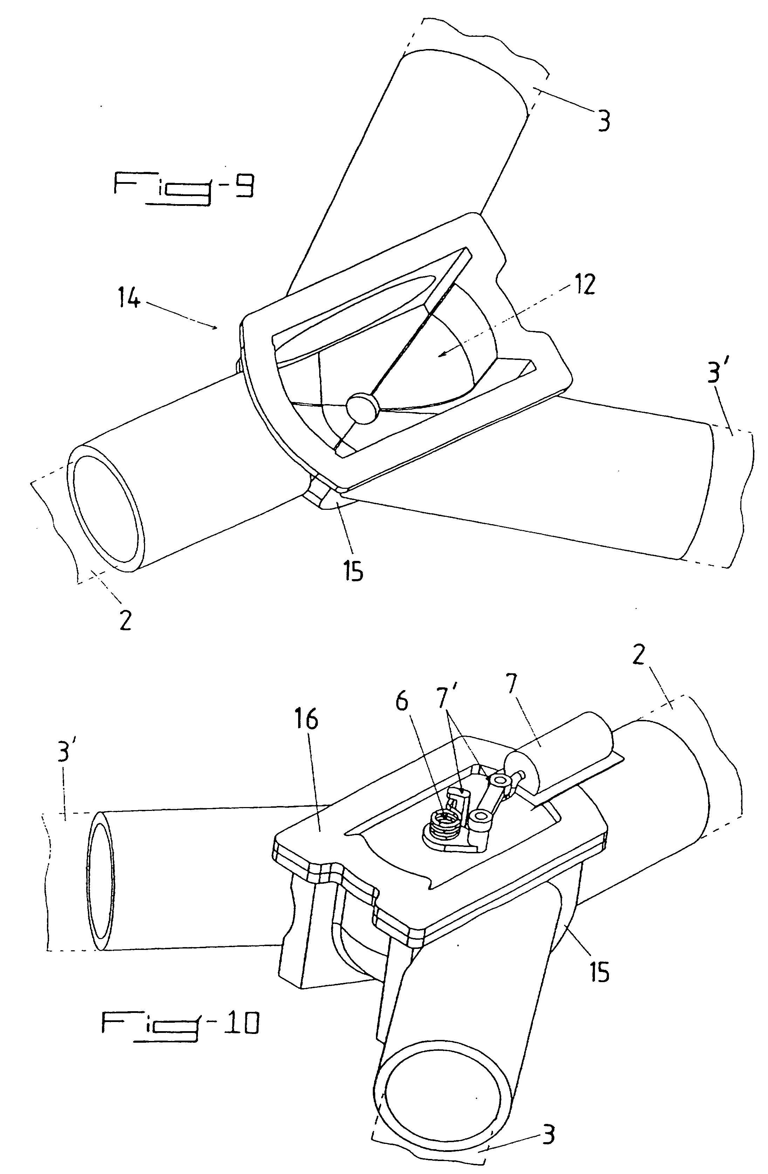

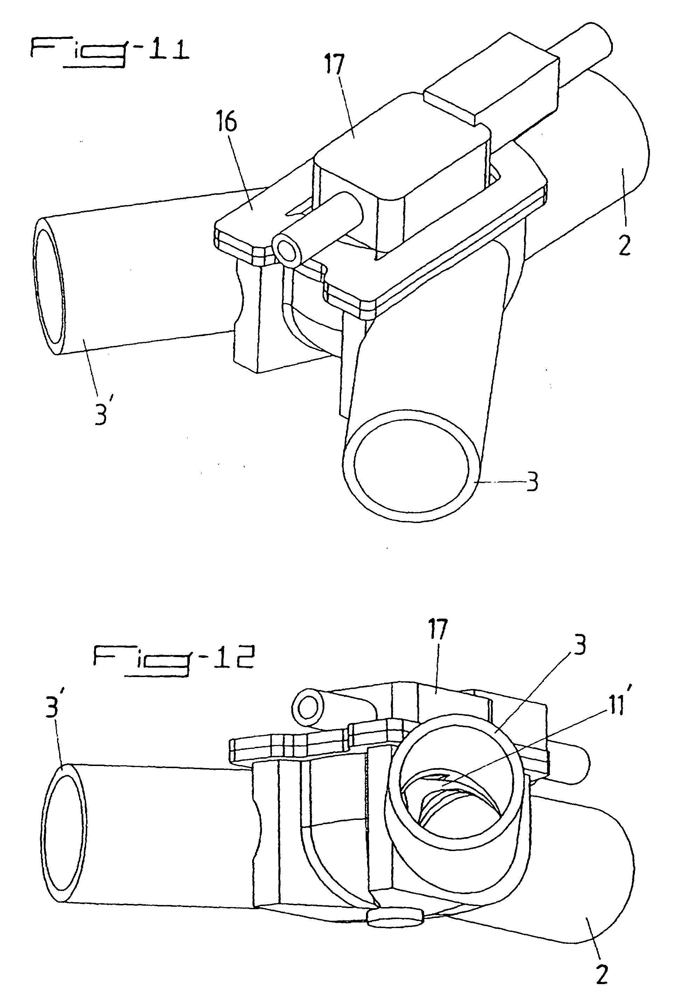

Conformément à une autre caractéristique de l'invention représentée notamment sur les figures 7 et 10 à 12 des dessins annexés, et afin de réduire davantage encore les perturbations susceptibles d'être générées dans le trajet autorisé par la présence de l'exemple d'obturation et/ou de distribution, le dispositif de commande 7 du clapet est situé hors du ou des flux de fluide(s) 1, 1' dans les conduits primaire(s) 2, 2' et secondaire(s) 3, 3', le positionnement dudit corps de clapet 4 étant déterminé, le cas échéant, en fonction d'au moins un paramètre physico-chimique du ou des fluides 1, 1', tel que par exemple la température, mesuré dans un circuit de dérivation ou de circulation secondaire 17, alimenté par un conduit primaire 2, 2' ou secondaire 3, 3' ou reliant deux de ces derniers.

Le dispositif de commande 7 assurant le pilotage de l'ensemble à clapet ou vanne de distribution et/ou d'obturation peut ainsi comprendre un thermostat commandé thermiquement par un flux de fluide présent dans un circuit secondaire, séparé du circuit constitué par les conduits primaire 2, 2' et secondaire 3, 3' ou disposé en dérivation par rapport à ce dernier.

Le pilotage de l'ensemble à clapet ou de la vanne peut, en variante, également être réalisé par un thermostat commandé, par exemple un chauffage électrique, contrôlé par l'utilisateur, d'une cartouche de cire, permettant la dilatation de cette dernière et la récupération du mouvement résultant pour l'actionnement du corps de clapet 4 par l'intermédiaire de l'axe de rotation 6 (voir notamment figures 7 et 10 des dessins annexés).

Il est également possible de combiner les deux modes de pilotage précédents, à savoir par chauffage électrique commandé et par action thermique d'un flux de fluide circulant dans un circuit secondaire, ce qui permet de garantir un fonctionnement thermostatique même en cas de dysfonctionnement du pilotage électrique.

Enfin, le pilotage de l'ensemble à clapet ou de la vanne peut aussi être réalisé par actionnement mécanique commandé ou par motorisation électrique, telle qu'un moteur couple, un moteur à courant continu ou encore un moteur pas à pas.

En ce qui concerne le type de commande de l'ensemble à clapet ou de la vanne, il peut être prévu soit un fonctionnement à seulement deux états (tout ou rien), correspondant au basculement du corps de clapet 4 dans l'une de ses deux positions extrêmes, soit un fonctionnement du type continu et proportionnel à la commande.

Dans ce dernier cas, il est possible de séparer le flux de fluide 1, 1' venant du conduit primaire 2, 2' en deux flux secondaires s'écoulant chacun dans un conduit secondaire 3, 3' correspondant. La variation de la position du corps de clapet 4 est alors géré par le dispositif de commande 7 en fonction de la valeur du paramètre mesuré, par exemple de la température du fluide 1, 1'.

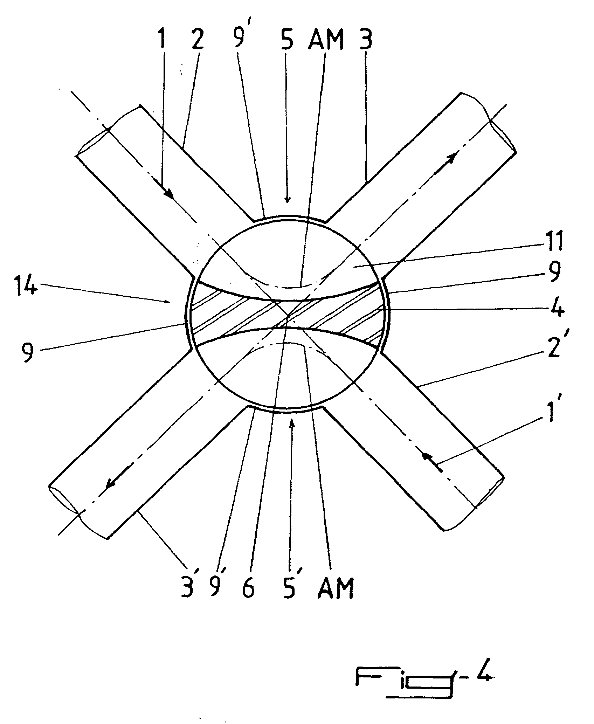

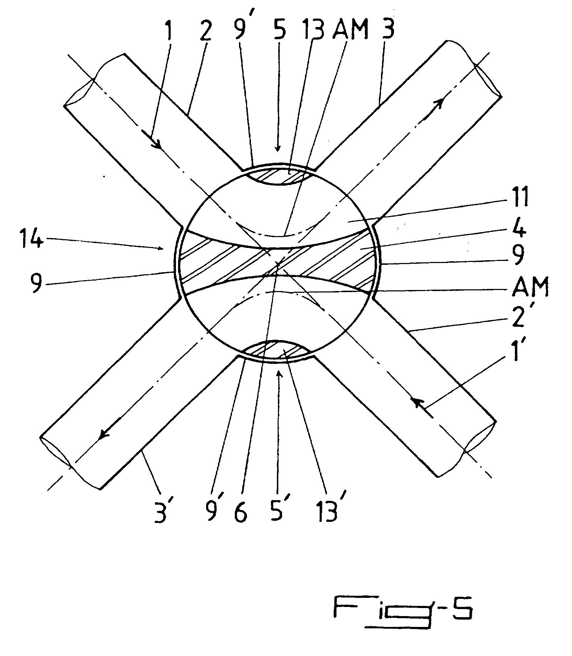

Selon une autre caractéristique de l'invention, représentée notamment aux figures 3 et 4 des dessins annexés, le corps de clapet 4 et une partie au moins de la ou des zone(s) 8, 8' d'appui de ce dernier au niveau de la paroi interne de la ou des portion(s) de conduit(s) intermédiaire(s) 5, 5', ou une partie au moins de la ou des zone(s) 9, 9' de paroi interne de la ou des portion(s) de conduit(s) intermédiaire(s) 5, 5' destinée(s) à coopérer par complémentarité de formes avec ledit corps de clapet 4 pour réaliser une obturation, dans l'une au moins des positions extrêmes de ce dernier, peuvent présenter des formes respectives telles qu'ils autorisent dans ladite au moins une position extrême, une fuite calibrée de fluide 1, 1' vers le conduit secondaire 3, 3' vers lequel le passage est obturé.

Cette fuite calibrée est obtenue en définissant un interstice de passage déterminé 4' entre le bord du corps du clapet 4 et ladite zone d'appui ou de forme complémentaire de la paroi interne des portions de conduits intermédiaires 5, 5'. Cet interstice peut être formé en réalisant une déformation au niveau de la ou des zone(s) correspondante(s) de ladite paroi interne et/ou en altérant une partie au moins du bord extérieur du corps de clapet 4.

En variante, la fuite calibrée peut également être obtenue en ménageant une ou plusieurs ouvertures de forme et de dimension déterminées dans le corps de clapet 4 lui-même, ce qui permet en particulier d'obtenir des fuites d'importance identique dans les deux positions extrêmes dudit corps de clapet 4.

Le mode de réalisation pratique de la fuite calibrée devra, autant que possible, ne pas entraîner de perturbation dans l'écoulement du fluide 1, 1' suivant le trajet autorisé.

En vue d'aboutir à une fabrication industrielle économique, peu fastidieuse et fiable, notamment en terme d'étanchéité, il peut être avantageusement prévu que le corps de clapet 4 et l'axe de rotation 6 soient réalisés sous la forme d'un élément ou corps à insérer 11 et soient, le cas échéant, intégrés dans une pièce à insérer 11' (également dénommé cassette) formant également les parois internes de la ou des portion(s) de conduit(s) intermédiaire(s) 5, 5', en particulier les zones d'appui 8, 8' du corps de clapet 4 dans ses positions extrêmes ou les zones de parois internes 9, 9' de forme complémentaire, ledit élément ou ladite pièce à insérer 11 étant monté(e) par emboîtement dans une découpe ou une cavité 12 de forme correspondante ménagée dans une zone de raccordement dudit au moins un conduit primaire 2, 2' avec ledit au moins un conduit secondaire 3, 3' (voir figures 4 à 9).

L'introduction de l'élément ou du corps à insérer 11 ou de la pièce à insérer 11' s'effectuera préférentiellement selon une direction parallèle à la direction finale de l'axe de rotation 6 après sont montage.

Les figures 1 à 6 des dessins annexés représentent schématiquement, à titre d'exemples non limitatifs, trois cas d'application pratique de l'invention, correspondant en fait à trois modes de réalisation de cette dernière, à savoir, d'une part, une application en tant qu'organe obturateur dans un système à deux voies (une voie d'entrée et une voie de sortie), représenté sur la figure 6 des dessins annexés, d'autre part, une application en tant qu'organe de distribution/obturation dans un système à trois voies (une voie d'entrée et deux voies de sortie), représenté aux figures 1 à 3 et 7 à 12 des dessins annexés et, enfin, une application en tant qu'organe de distribution dans un système à quatre voies (deux voies d'entrée et deux voies de sortie), représenté aux figures 4 et 5 des dessins annexés.

Dans ces trois modes de réalisation, le corps de clapet 4 constitue avec le corps 11" de la pièce à insérer 11' ou les parois des portions de conduits intermédiaires 5, 5', une vanne d'obturation et/ou de distribution intégrée dans la zone de convergence des conduits primaires 2, 2' et secondaires 3, 3'.

Dans le mode de réalisation de la figure 6, l'ensemble à clapet réalise uniquement une fonction du type ouverture/fermeture de passage entre une portion de conduit amont 2 et une portion de conduit aval 3. En effet, dans sa position escamotée, le corps de clapet 4 laisse passer librement le fluide 1 avec une perte de charge minimale et, dans sa position déployée, ledit corps de clapet 4 obstrue le passage et empêche toute circulation de fluide 1.

Dans le mode de réalisation des figures 1 à 3 et 7 à 12, l'ensemble à clapet permet de diriger le flux de fluide 1 s'écoulant dans le conduit primaire 2 vers l'un des deux conduits secondaires 3 ou 3', en obstruant totalement (ou avec une fuite calibrée) l'entrée vers l'autre desdits conduits secondaires 3 ou 3', tout en générant une perte de charge minimale.

Comme le montrent les figures 1 à 3 et 6 des dessins annexés, la portion de corps de clapet 4 s'étendant en direction amont de l'axe de rotation 6 peut être avantageusement plus grande que la portion de corps de clapet 4 s'étendant en direction aval, préférentiellement avec un rapport d'environ 2 : 1, ledit corps de clapet 4 étant avantageusement, en particulier dans un système à trois voies à structure en Y, aligné avec l'axe médian AM du flux de fluide 1, 1' dans la conduite primaire 2, 2' en position d'ouverture intermédiaire.

Dans le mode de réalisation des figures 4 et 5 des dessins annexés, destiné à un système à quatre voies, le corps de clapet 4 peut avantageusement se présenter sous le forme d'une paroi de séparation délimitant, le cas échéant en coopération avec deux portions de parois opposées 9, 9' ou 13, 13' situées de part et d'autre dudit corps de clapet 4, deux portions de trajets ou de conduits intermédiaires et 5' reliant chacune un conduit amont 2, 2' et un conduit aval 3, 3' entre eux, la rotation dudit corps de clapet 4 d'une position extrême à l'autre permettant d'inverser les connections entre les conduits amont 2, 2' et aval 3, 3'.

Afin de faciliter le montage de l'ensemble à clapet et de minimiser les pertes de charge des fluides 1 et 1' dans ce mode de réalisation, le corps de clapet 4 et les deux portions de parois opposées 13, 13' font préférentiellement partie intégrante d'un corps 11 monté avec faculté de rotation, à la manière d'un boisseau sphérique, conique ou cylindrique, au niveau de la zone du noeud de convergence 14 des conduits amont 2, 2' et aval 3, 3', le corps de clapet 4 formant en coupe transversale une paroi doublement convexe et les portions de parois 13, 13' présentant une conformation bombée dirigée vers les renfoncements convexes opposés respectifs dudit corps de clapet 4.

Comme le montrent les figures 4 et 5, le corps de clapet 4 est excentré par rapport aux trajets possibles pour les flux de fluide 1 et 1' et fait office de paroi de séparation des deux circuits et d'éléments de paroi latérale pour chacune des portions de conduits intermédiaires 5 et 5'. Par simple rotation à 90°, il est possible de réaliser simultanément deux inversions de connexion en permettant de passer d'un schéma de circulation 1-3 / 1'-3' à un schéma de circulation 1-3' / 1'-3.

L'ensemble à clapet ou vanne est avantageusement constitué de composants en matériau thermoplastique (à l'exception des organes de pilotage) assemblés entre eux par soudage, vissage ou collage. Il peut notamment être envisagé de réaliser le corps de clapet 4 d'un seul tenant avec l'axe de rotation 6.

En variante, les composants mobiles et fonctionnels peuvent également être constitués par des pièces métalliques, soudées ou vissées entre elles.

La présente invention a également pour objet un dispositif de circulation et de distribution de fluide(s) 1, 1' entre au moins un conduit primaire 2, 2' et au moins un conduit secondaire 3, 3'.

Ce dispositif de circulation de distribution est principalement constitué, d'une part, par une pièce 15 d'un seul tenant, formée par l'assemblage convergent et communicant de plusieurs conduits tubulaires 2, 2', 3, 3' ou de plusieurs portions de conduits tubulaires raccordés à des conduits 2, 2', 3, 3', notamment en forme de Y (système à trois voies) ou de X (système à quatre voies), et présentant une découpe ou une ouverture d'accès 12 au niveau de la zone du noeud de convergence 14 des conduits primaire(s) 2, 2' et secondaire(s) 3, 3' et, d'autre part, par un ensemble à clapet ou une vanne tel(le) que décrit(e) précédemment, dont le corps de clapet 4 ou l'organe d'obturation et/ou de distribution analogue et l'axe de rotation 6 au moins sont mis en place dans ladite zone du noeud de convergence 14 à travers l'ouverture d'accès 12, cette dernière étant obturée de manière étanche par un couvercle ou un bouchon 16 correspondant.

Selon une caractéristique complémentaire de l'invention, représentée notamment aux figures 7, 8 et 10 des dessins annexés, l'axe de rotation 6 traverse le couvercle ou bouchon de fermeture 16 de l'ouverture d'accès 12, ce dernier portant au moins une partie du mécanisme d'actionnement 7' formant une composante du dispositif de commande 7 du clapet.

Comme le montre plus précisément la figure 8 des dessins annexés, le couvercle de fermeture 16 pourra être éventuellement réalisé intégralement avec le corps structurel 11" de la pièce à insérer 11' et avec au moins un élément support 18 pour une partie au moins du dispositif de pilotage 7. L'étanchéité pourra alors être réalisée par contact surfacique entre des zones de bordure périphériques de l'ouverture 12 et du couvercle 16 formant plateforme support (figures 9 et 10).

Pour le cas où l'ensemble à clapet comporte une pièce à insérer 11', l'étanchéité aux fluides 1, 1' au niveau de la zone de convergence peut être aisément optimisée par la réalisation d'un ensemble préalable corps structurel 11' / corps de clapet 4 et axe de rotation 6, dont les contacts périphériques des composantes dans les positions extrêmes pourront être finement ajustés et ne seront pas affectés par le montage de ladite pièce à insérer 11' dans ladite pièce 15.

L'ensemble à clapet et le dispositif de circulation et de distribution décrit ci-dessus sont particulièrement bien adaptés pour une application dans le circuit de refroidissement d'un véhicule automobile à moteur thermique, mais également pour des applications dans les circuits de circulation d'air, de carburant, de liquide de lave-glace et de gaz d'échappement de tels véhicules.

Par ailleurs, il peut également être envisagé de mettre en oeuvre les objets de la présente invention dans le cadre des circuits de refroidissement de moteurs thermiques en général, dans le cadre de moteurs ou de génératrices électriques ou encore dans le domaine du sanitaire et, de manière plus large, dans tous les domaines techniques faisant appel à une circulation de fluides liquides ou gazeux.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble à clapet ou vanne de distribution ou d'obturation, destiné(e) à contrôler le passage d'au moins un flux de fluide entre au moins un conduit amont ou primaire et au moins un conduit aval ou secondaire et comprenant un corps de clapet mobile formant organe de distribution et/ou d'obturation, **caractérisé en ce que** le corps de clapet (4) forme, dans au moins une de ses positions extrêmes, une partie de la paroi de la ou des portion(s) de conduit(s) intermédiaire(s) (5, 5') reliant ledit au moins un conduit amont ou primaire (2, 2') audit au moins un conduit aval ou secondaire (3, 3'), l'axe de rotation (6) portant le corps du clapet (4) étant déporté latéralement par rapport à l'axe ou aux axes médians (AM) du ou des trajet(s) de circulation possibles pour le ou les flux de fluide(s) (1, 1'), notamment dans les conduits aval ou secondaires (3, 3'), le corps de clapet (4) formant une partie de la ou des portion(s) de conduit(s) intermédiaire(s) (5, 5') dans chacune de ses positions extrêmes, **caractérisé en ce que** le corps de clapet (4) et l'axe de rotation (6) sont réalisés sous la forme d'un élément ou corps à insérer (11) et sont, le cas échéant, intégrés dans une pièce à insérer (11') formant également les parois internes de la ou des portion(s) de conduit(s) intermédiaire(s) (5, 5'), en particulier les zones d'appui (8, 8') du corps de clapet (4) dans ses positions extrêmes ou les zones de parois internes (9, 9') de forme complémentaire, ledit élément ou ladite pièce à insérer (11) étant monté(e) par emboîtement dans une découpe ou une cavité (12) de forme correspondante ménagée dans une zone de raccordement dudit au moins un conduit primaire (2, 2') avec ledit au moins un conduit secondaire (3, 3')..

2. Ensemble à clapet selon la revendication 1, **caractérisé en ce que** le dispositif de commande (7) du clapet est situé hors du ou des flux de fluide(s) (1, 1') dans les conduits primaire(s) (2, 2') et secondaire(s) (3, 3'), le positionnement dudit corps de clapet (4) étant déterminé, le cas échéant, en fonction d'au moins un paramètre physico-chimique du ou des fluides (1, 1'), tel que par exemple la température, mesuré dans un circuit de dérivation ou de circulation secondaire, alimenté par un conduit primaire (2, 2') ou secondaire (3, 3') ou reliant deux de ces derniers.

3. Ensemble à clapet selon la revendication 1 ou 2, **caractérisé en ce que** le corps de clapet (4) et une partie au moins de la ou des zone(s) d'appui (8, 8') de ce dernier au niveau de la paroi interne de la ou des portion(s) de conduit(s) intermédiaire(s) (5, 5'), ou une partie au moins de la ou des zone(s) (9, 9') de paroi interne de la ou des portion(s) de conduit(s) intermédiaire(s) (5, 5') destinée(s) à coopérer par complémentarité de formes avec ledit corps de clapet (4) pour réaliser une obturation, dans l'une au moins des positions extrêmes de ce dernier, présentent des formes respectives telles qu'ils autorisent dans ladite au moins une position extrême, une fuite calibrée de fluide (1, 1') vers le conduit secondaire (3, 3') vers lequel le passage est obturé.

4. Ensemble à clapet selon la revendications 1 ou 2, **caractérisé en ce que** le corps de clapet (4) comprend une ou plusieurs ouverture(s) de forme et de dimension déterminées.

5. Ensemble à clapet selon l'une quelconque des revendications 1 à 4, **caractérisé en ce que** la portion de corps de clapet (4) s'étendant en direction amont de l'axe de rotation (6) est plus grande que la portion de corps de clapet (4) s'étendant en direction aval, préférentiellement avec un rapport d'environ 2 : 1, ledit corps de clapet (4) étant aligné avec l'axe médian (AM) du flux de fluide (1, 1') dans la conduite primaire (2, 2') en position d'ouverture intermédiaire.

6. Ensemble à clapet selon l'une quelconque des revendications 1 à 4, **caractérisé en ce que** le corps de clapet (4) se présente sous le forme d'une paroi de séparation délimitant, le cas échéant en coopération avec deux portions de parois opposées (9, 9' ou 13, 13') situées de part et d'autre dudit corps de clapet (4), deux portions de trajets ou de conduits intermédiaires (5 et 5') reliant chacune un conduit amont (2, 2') et un conduit aval (3, 3') entre eux, la rotation dudit corps de clapet (4) d'une position extrême à l'autre permettant d'inverser les connections entre les conduits amont (2, 2') et aval (3, 3').

7. Ensemble à clapet selon la revendication 6, **caractérisé en ce que** le corps de clapet (4) et les deux portions de parois opposées (13, 13') font partie intégrante d'un corps (11) monté avec faculté de rotation, à la manière d'un boisseau sphérique, conique ou cylindrique, au niveau de la zone du noeud de convergence (14) des conduits amont (2, 2') et aval (3, 3'), le corps de clapet (4) formant en coupe transversale une paroi doublement convexe et les portions de parois (13, 13') présentant une conformation bombée dirigée vers les renfoncements convexes opposés respectifs dudit corps de clapet (4).

8. Dispositif de circulation et de distribution de fluide(s) entre au moins un conduit primaire et au moins un conduit secondaire, **caractérisé en ce qu'**il est principalement constitué, d'une part, par une pièce (15) d'un seul tenant, formée par l'assemblage convergent et communicant de plusieurs conduits tubulaires (2, 2', 3, 3') ou de plusieurs portions de conduits tubulaires raccordés à des conduits (2, 2', 3, 3'), notamment en forme de Y ou de X, et présentant une découpe ou une ouverture d'accès (12) au niveau de la zone du noeud de convergence (14) des conduits primaire(s) (2, 2') et secondaire(s) (3, 3') et, d'autre part, par un ensemble à clapet ou une vanne selon l'une quelconque des revendications 1 à 7, dont le corps de clapet (4) ou l'organe d'obturation et/ou de distribution analogue et l'axe de rotation (6) au moins sont mis en place dans ladite zone du noeud de convergence (14) à travers l'ouverture d'accès (12), cette dernière étant obturée de manière étanche par un couvercle ou un bouchon (16) correspondant.

9. Dispositif selon la revendication 8, **caractérisé en ce que** l'axe de rotation (6) traverse le couvercle ou bouchon de fermeture (16) de l'ouverture d'accès (12), ce dernier portant au moins une partie du mécanisme d'actionnement (7') formant une composante du dispositif de commande (7) du clapet.

## Patentansprüche

1. Verteiler- oder Absperrklappen- oder -ventilanordnung zum Regeln des Durchflusses mindestens eines Fluidstroms zwischen mindestens stromaufwärtigen oder primären Leitung und mindestens einer stromabwärtigen oder sekundären Leitung, und mit einem bewegbaren Klappenkör-per, der ein Verteiler- und/oder Absperrelement bildet, **dadurch gekennzeichnet, daß** der Klappenkörper (4) in mindestens einer seiner Endpositionen einen Teil der Wand des Bereichs oder der Bereiche einer oder mehrerer Zwischenleitungen (5, 5') bildet, welche die genannte mindestens eine stromaufwärtige oder primäre Leitung (2, 2') mit der genannten mindestens einen stromabwärtigen oder sekundären Leitung (3, 3') verbinden, wobei die den Klappenkörper (4) tragende Drehachse (6) in bezug auf die Mittelachse(n) (AM) der möglichen Zirkulationsbahn(en) der Fluidströmung(en) (1, 1'), insbesondere in den stromabwärtigen oder sekundären Leitungen (3, 3'), seitlich versetzt ist, wobei der Klappenkörper (4) in jeder seiner Endpositionen einen Teil des Bereichs oder der Bereiche der Zwischenleitung(en) (5, 5') bildet, wobei der Klappenkörper (4) und die Drehachse (6) als ein Einsatzelement oder -körper (11) ausgebildet sind und gegebenenfalls zu einem Einsatzteil (11') integriert sind, das ebenfalls die Innenwände des oder der Bereiche der Zwischenleitung(en) (5, 5'), insbesondere die Anlagezonen (8, 8') des Klappenkörpers (4) in dessen Endpositionen oder die Zonen der Innenwände (9, 9') mit komplementärer Form, bildet, wobei das Einsatzelement oder -teil (11') durch Einbau in einen Ausschnitt oder einen Hohlraum (12) von entsprechender Form angebracht ist, welcher im Bereich der Verbindung zuwischen der wenigstens einen primären Leitung (2, 2') und der mindestens einen sekundären Leitung (3, 3') ausgebildet ist.

2. Klappenanordnung nach Anspruch 1, **dadurch gekennzeichnet, daß** die Klappenregelvorrichtung (7) außerhalb der Strömung/-en des/der Fluids/-e (1, 1') in den primären (2,2') und sekundären Leitungen (3, 3') angeordnet ist, wobei die Positionierung des Klappenkörpers (4) gegebenenfalls in Abhängigkeit von wenigstens einem physikalisch-chemischen Parameter des Fluids oder der Fluide (1, 1'), beispielsweise die Temperatur, bestimmt ist, der in einem Abzweig- oder Sekundärzirkulationskreislauf gemessen wird, welcher von einer primären (2, 2') oder sekundären Leitung (3, 3') gespeist ist oder zwei derselben verbindet.

3. Klappenanordnung nach Anspruch 1 oder 2, **dadurch gekennzeichnet, daß** der Klappenkörper (4) und zumindest ein Teil der Anlagezone(n) (8, 8') desselben an der Innenwand des Bereichs oder der Bereiche der Zwischenleitung(en) (5, 5') oder zumindest ein Teil der Zone(n) (9, 9') der Innenwand des Bereichs oder der Bereiche der Zwischenleitung(en) (5, 5'), der/die mit dem Klappenkörper (4) in wenigstens einer seiner Endpositionen zur Bildung einer Absperrung durch Formkomplementarität zusammenwirken soll(en), jeweils Formen aufweisen, die in der wenigstens einen Endposition ein kalibriertes Entweichen von Fluid (1, 1') in Richtung der sekundären Leitung (3, 3') ermöglichen, zu der der Durchlaß abgesperrt ist.

4. Klappenanordnung nach Anspruch 1 oder 2, **dadurch gekennzeichnet, daß** der Klappenkörper (4) eine oder mehrere Öffnungen mit bestimmten Formen und Abmessungen aufweist.

5. Klappenanordnung nach einem der Ansprüche 1 bis 4, **dadurch gekennzeichnet, daß** der Bereich des Klappenkörpers (4), der sich stromaufwärts von der Drehachse (6) erstreckt, größer ist als der sich stromabwärts erstreckende Bereich des Klappenkörpers (4), vorzugsweise in einem Verhältnis von 2:1, wobei der Klappenkörper (4) in der mittleren Öffnungsstellung mit der Mittelachse (AM) der Fluidströmung (1, 1') in der primären Leitung (2, 2') ausgerichtet ist.

6. Klappenanordnung nach einem der Ansprüche 1 bis 4, **dadurch gekennzeichnet, daß** der Klappenkörper (4) in Form einer Trennwand vorliegt, welche, gegebenenfalls in Zusammenwirken mit zwei einander gegenüberliegenden Wandbereichen (9, 9' oder 13, 13'), die sich zu beiden Seiten des Klappenkörpers (4) befinden, zwei Bahn- oder Zwischenleitungsbereiche (5 und 5') begrenzt, welche jeweils eine stromaufwärtige Leitung (2, 2') und eine stromabwärtige Leitung (3, 3') miteinander verbinden, wobei die Drehung des Klappenkörpers (4) von der einen Endposition in die andere Endposition das Umkehren der Verbindungen zwischen den stromaufwärtigen (2, 2') und stromabwärtigen Leitungen (3, 3') ermöglicht.

7. Klappenanordnung nach Anspruch 6, **dadurch gekennzeichnet, daß** der Klappenkörper (4) und die beiden gegenüberliegenden Wandbereiche (13, 13') einen integrierenden Bestandteil eines nach Art eines kugelförmigen, konischen oder zylindrischen Absperrschiebers drehbar ange-brachten Körpers (11) im Bereich des Zusammenlaufs (14) der stromaufwärtigen (2, 2') und stromabwärtigen Leitungen (2, 2') bilden, wobei der Klappenkörper (4) im Querschnitt eine doppelt konvexe Wand bildet und die Wandbereiche (13, 13') eine gewölbte Ausbildung aufweisen, die in Richtung der jeweiligen gegenüberliegenden konvexen Vertiefun-gen des Klappenkörpers (4) gerichtet ist.

8. Vorrichtung zum Umlaufenlassen und Verteilen von Fluid(en) zwischen zumindest einer primären Leitung und zumindest einer sekundären Lei-tung, **dadurch gekennzeichnet, daß** sie im Prinzip einerseits aus einem einstückigen Teil (15) besteht, das durch eine konvergierende und verbindende Montage mehrerer Rohrleitungen (2, 2', 3, 3') oder mehrerer mit den Leitungen (2, 2', 3, 3') verbundener Rohrleitungsabschnitte insbesondere in Form eines Y oder X gebildet ist, und einen Zugangsausschnitt oder eine Zugangsöffnung (12) im Bereich des Zusammenlaufs (14) der primären (2, 2') und sekundären Leitung(en) (3, 3') aufweist, und andererseits aus einer Klappen- oder Ventilanordnung nach einem der Ansprüche 1 bis 7 besteht, bei der zumindest der Klappenkörper (4) oder ein analoges Absperr- und/oder Verteilerelement und die Drehachse (6) im Bereich des Zusammenlaufs (14) über die Zugangsöffnung (12) eingesetzt werden, wobei letztere mit einem Deckel oder einem entsprechenden Stopfen (16) dicht geschlossen wird.

9. Vorrichtung nach Anspruch 8, **dadurch gekennzeichnet, daß** die Drehachse (6) den Verschlußdeckel oder -stopfen (16) der Zugangsöffnung (12) durchquert, wobei dieser zumindest einen Teil des Betätigungsmechanismus (7') trägt, der ein Bestandteil der Regelvorrichtung (7) der Klappe ist.

## Claims

1. Valve assembly or valve allowing distribution or closure, intended to control the passage of at least one stream of fluid between at least one upstream or primary duct and at least one downstream or secondary duct and comprising a movable valve body forming a distribution and/or closure member, **characterized in that** the valve body (4) forms, in at least one of its end positions, part of the wall of the intermediate duct portion or portions (5, 5') connecting the said at least one upstream or primary duct (2, 2') to the said at least one downstream or secondary duct (3, 3'), the rotation pin (6) bearing the valve body (4) being offset laterally with respect to the median axis or axes (AM) of the possible path or paths of circulation for the fluid stream or streams (1, 1'), particularly in the downstream or secondary ducts (3, 3'), the valve body (4) forming part of the intermediate duct portion or portions (5, 5') in each of its end positions, **characterized in that** the valve body (4) and the rotation pin (6) are produced in the form of an element or body (11) to be inserted and are, where appropriate, incorporated into a part (11') to be inserted also forming the inner walls of the intermediate duct portion or portions (5, 5'), in particular the bearing regions (8, 8') for the valve body (4) in its end positions or the inner wall regions (9, 9') of complementary shape, the said element or the said part (11) to be inserted being mounted by fitting it into a cutout or a cavity (12) of corresponding shape made in a region for connecting the said at least one primary duct (2, 2') to the said at least one secondary duct (3, 3').

2. Valve assembly according to Claim 1, **characterized in that** the control device (7) for the valve is situated outside the fluid stream or streams (1, 1') in the primary duct or ducts (2, 2') and secondary duct or ducts (3, 3'), the position of the said valve body (4) being determined, where appropriate, as a function of at least one physicochemical parameter of the fluid or fluids (1, 1'), such as temperature, for example, measured in a bypass or secondary circulation circuit supplied by a primary duct (2, 2') or secondary duct (3, 3') or interconnecting two of these ducts.

3. Valve assembly according to Claim 1 or 2, **characterized in that** the valve body (4) and at least part of the bearing region or regions (8, 8') for the latter on the inner wall of the intermediate duct portion or portions (5, 5'), or at least part of the inner wall region or regions (9, 9') of the intermediate duct portion or portions (5, 5') which is or are intended to cooperate through the complementary nature of their shapes with the said valve body (4) to effect a closure, in at least one of the end positions of the latter, have respective shapes such that they allow, in the said at least one end position, a calibrated leakage of fluid (1, 1') towards the secondary duct (3, 3') towards which passage is closed.

4. Valve assembly according to Claim 1 or 2, **characterized in that** the valve body (4) comprises one or more openings of predetermined shape and size.

5. Valve assembly according to any one of Claims 1 to 4, **characterized in that** the portion of the valve body (4) extending in an upstream direction from the rotation pin (6) is greater than the portion of the valve body (4) extending in a downstream direction, preferably with a ratio of about 2:1, the said valve body (4) being aligned with the median axis (AM) of the fluid stream (1, 1') in the primary duct (2, 2') in an intermediate open position.

6. Valve assembly according to any one of Claims 1 to 4, **characterized in that** the valve body (4) takes the form of a separation wall delimiting, where appropriate in cooperation with two opposed wall portions (9, 9' or 13, 13') situated on either side of the said valve body (4), two portions of paths or of intermediate ducts (5 and 5') each interconnecting an upstream duct (2, 2') and a downstream duct (3, 3'), the rotation of the said valve body (4) from one end position to the other making it possible to reverse the connections between the upstream ducts (2, 2') and downstream ducts (3, 3').

7. Valve assembly according to Claim 6, **characterized in that** the valve body (4) and the two opposed wall portions (13, 13') form an integral part of a body (11) mounted with the ability to rotate, in the manner of a spherical, conical or cylindrical slide valve, in the region of the convergence node (14) of the upstream ducts (2, 2') and downstream ducts (3, 3'), the valve body (4) forming in cross section a doubly convex wall and the wall portions (13, 13') having a curved configuration directed towards the respective opposed convex recesses of the said valve body (4).

8. Device for the circulation and distribution of fluid or fluids between at least one primary duct and at least one secondary duct, **characterized in that** it mainly consists, on the one hand, of a part (15) made as a single piece formed by the convergent assembly and communicating with a plurality of tubular ducts (2, 2', 3, 3') or with a plurality of tubular duct portions connected to ducts (2, 2', 3, 3'), particularly of Y shape or X shape, and having a cutout or an access opening (12) in the region of the convergence node (14) of the primary duct or ducts (2, 2') and secondary duct or ducts (3, 3') and, on the other hand, of a valve assembly or a valve according to any one of Claims 1 to 7, of which at least the valve body (4) or the analogous closure and/or distribution member and the rotation pin (6) are placed in the said region of the convergence node (14) through the access opening (12), the latter being closed in a sealed manner by a corresponding cover or plug (16).

9. Device according to Claim 8, **characterized in that** the rotation pin (6) passes through the cover or closure plug (16) for the access opening (12), the latter bearing at least part of the actuating mechanism (7') forming a component of the control device (7) for the valve.
